# EUROPÄISCHE PATENTSCHRIFT

(11) **EP 3 420 645 B1**
(45) Veröffentlichungstag und Bekanntmachung des Hinweises auf die Patenterteilung: **23.08.2023**
(21) Anmeldenummer: 17702041.9
(22) Anmeldetag: 24.01.2017
(51) Int. Cl.: H04B 3/32, H04B 3/487, H04B 3/30

(54) **DATENÜBERTRAGUNGSSYSTEM, STEUERGERÄT UND VERFAHREN ZUR DATENÜBERTRAGUNG**
DATA TRANSFER SYSTEM, CONTROL UNIT, AND METHOD FOR TRANSFERRING DATA
SYSTÈME DE TRANSMISSION DE DONNÉES, APPAREIL DE COMMANDE ET PROCÉDÉ DE TRANSMISSION DE DONNÉES

(30) Priorität: 26.02.2016 DE 102016203078; 08.07.2016 DE 102016212500; 15.07.2016 DE 102016212991
(43) Veröffentlichungstag der Anmeldung: 02.01.2019
(73) Patentinhaber: Volkswagen Aktiengesellschaft, 38440 Wolfsburg (DE)
(72) Erfinder: DIAZ ORTEGA, Lorena, 38448 Wolfsburg (DE); GERFERS, Friedel, 14195 Berlin (DE); MORTAZAVI, Sanaz, 14055 Berlin (DE)
(86) Internationale Anmeldenummer: PCT/EP2017/051440
(87) Internationale Veröffentlichungsnummer: WO 2017/144213

(56) Entgegenhaltungen:
- CA-A1- 2 273 658
- US-A1- 2009 034 592
- US-B1- 8 442 099

## Beschreibung

Die Erfindung betrifft ein Datenübertragungssystem, ein Steuergerät sowie ein Verfahren zur Datenübertragung.

Die technologische Entwicklung innerhalb von Automobilen schreitet rasant voran, wodurch sich die Anzahl von elektrischen und elektronischen Systemen in Automobilen drastisch erhöht: Systeme Control Area Networks (CAN), Sicherheitssysteme, Kommunikation, Mobile Media, Infotainment-Systeme einschließlich drahtlose Kopfhörer, DC-Motoren und Steuerungen um nur einige zu nennen. Die extremen Größen- und Gewichtsbeschränkungen im Automobil-Design fordern, dass diese Systeme einen sehr kleinen (physikalischen) Formfaktor aufweisen. Dies bedeutet aber nicht zwangsläufig, dass auch die elektromagnetische Emission (EME) geringer ist. Platziert man nun eine große Anzahl von elektrischen und elektronischen Systemen in den sehr begrenzten Raum (eines Automobiles), steigt das Problem der elektromagnetischen Interferenz (EMI) aufgrund wechselseitiger Störungen durch Leitungs- und Strahlungsemissionen. Das Phänomen der elektromagnetischen Interferenz wird auch als Übersprechen (Crosstalk) bezeichnet. Wird dieses nicht entsprechend im Rahmen der Systemauslegung berücksichtigt, kann es zu wechselseitigen Störungen bis hin zu Systemausfällen führen. Aufgrund der Elektrifizierung des Automobils ist die Notwendigkeit, EMI einzugrenzen, wichtiger denn je.

Die Vernetzung der einzelnen Baugruppen im Automobil oder Nutzfahrzeug basiert in Zukunft auf elektrischen Transceivern des (automotive) IEEE Standards 1000Base-T1. Dieser Standard verwendt pro Kanal eine einzige unshielded Twisted-Pair Leitung (UTP) zur Übermittlung von bis zu 1Gbit/s Daten. Durch elektromagnetische Interferenz koppeln unter anderem andere UTP Leitungen in den Übertragungskanal ein und beeinflussen/verfälschen sowohl den Common-Mode (Gleichtakt-Anteil) als auch den Differenz-Mode der übertragenen Datensignale. Dementsprechend werden z. B. zur Common-Mode Unterdrückung sehr komplexe Eingangsfilter verwendet. (u.a. Common-mode Choke etc).

Das oben beschriebene Problem ist für den vorhergehenden Standard 100Base-T1 (OABR) nahezu kein Problem aufgrund der sehr geringen Signalbandbreite von 66MHz.

Für den neuen Standard 1000Base-T1 mit ca. 350-500MHz Bandbreite ist dieses ein signifikantes Problem, so das EMI den Signal-Rauschabstand (SNR) des Empfängers reduziert und folglich Bit-Error Rate erhöht.

Aus der CA 2,273,658 A ist ein Datenübertragungssystem bekannt, wobei das Datenübertragungssystem ein erstes und ein zweites Steuergerät aufweist, wobei die Übertragungsstrecke zwischen den beiden Steuergeräten mindestens teilweise durch eine Zwei-Drahtleitung gebildet wird, über die ein Nutzsignal als Differenzsignal zwischen dem ersten Steuergerät und dem zweiten Steuergerät übertragen wird. Weiter weist das erste Steuergerät einen Transceiver und das zweite Steuergerät einen Receiver auf. Vor dem Receiver des zweiten Steuergeräts ist eine Messschaltung angeordnet, die derart ausgebildet ist, einen Gleichtakt-Anteil im Nutzsignal zu erfassen. Weiter ist eine Fehler-Korrekturschaltung vorgesehen, die derart ausgebildet ist, dass in Abhängigkeit vom erfassten Gleichtakt-Anteil ein Korrektursignal erzeugt wird. Schließlich ist eine Kompensationsschaltung vorgesehen, in der das empfangene Nutzsignal mittels des Korrektursignals korrigiert wird.

Der Erfindung liegt das technische Problem zugrunde, ein Datenübertragungssystem zu schaffen, das das Problem der elektromagnetischen Interferenz umfassender beseitigt. Ein weiteres technisches Problem ist die Schaffung eines geeigneten Steuergerätes sowie das Zurverfügungstellen eines geeigneten Verfahrens zur Datenübertragung.

Die Lösung des technischen Problems ergibt sich durch ein Datenübertragungssystem mit den Merkmalen des Anspruchs 1, ein Steuergerät mit den Merkmalen des Anspruchs 6 sowie ein Verfahren mit den Merkmalen des Anspruchs 7. Weitere vorteilhafte Ausgestaltungen ergeben sich aus den Unteransprüchen.

Hierzu weist das Datenübertragungssystem ein erstes Steuergerät und ein zweites Steuergerät auf, wobei die Übertragungsstrecke zwischen den beiden Steuergräten mindestens teilweise durch eine Zwei-Drahtleitung gebildet wird. Über die Zwei- Drahtleitung wird zwischen dem ersten Steuergerät und dem zweiten Steuergerät ein Nutzsignal als Differenzsignal übertragen, wobei das erste Steuergerät einen Transceiver und das zweite Steuergerät einen Receiver aufweist. Vor dem Receiver des zweiten Steuergerätes ist eine Messschaltung angeordnet, die derart ausgebildet ist, einen Gleichtakt-Anteil im Nutzsignal zu erfassen. Weiter ist eine Fehler-Korrekturschaltung vorgesehen, die derart ausgebildet ist, dass in Abhängigkeit vom erfassten Gleichtakt-Anteil ein Korrektursignal erzeugt wird. Weiter ist eine Kompensationsschaltung hinter dem Receiver angeordnet, die derart ausgebildet ist, dass das durch den Receiver empfangene Nutzsignal mittels des Korrektursignals korrigiert wird. Erfindungsgemäß wird also nicht primär versucht, den Gleichtakt-Anteil vor dem Receiver zu unterdrücken. Vielmehr wird der negative Einfluss durch den Gleichtakt-Anteil bestimmt und hinter dem Receiver korrigiert. Dies erlaubt eine erheblich umfassendere Kompensation von Störeinflüssen, was später noch weiter erläutert wird. Die Datenübertragung zwischen dem ersten Steuergerät und dem zweiten Steuergerät ist vorzugsweise bidirektional, sodass die Ausführungen für das erste Steuergerät auch für das zweite Steuergerät gelten und umgekehrt. Das Datenübertragungssystem ist vorzugsweise ein Ethernet-Übertragungssystem. Die Zwei-Drahtleitung ist vorzugsweise eine ungeschirmte verdrillte Doppelader UTP. Vorzugsweise werden die Fehler-Korrekturschaltung und die Kompensationsschaltung in einen gemeinsamen Chip des Receivers integriert. Dies reduziert die Bauteile-Varianz und erlaubt eine sehr kompakte Bauform mit wenig Bauteilen. Auch die Messschaltung kann in den Chip des Receivers integriert sein.

Insbesondere im Kraftfahrzeugbereich werden durch Schaltvorgänge in Motoren große Störsignale erzeugt. Die dabei induzierten Spannungen auf der Zwei-Drahtleitung können dabei sehr hoch sein und zu Problemen auf dem Chip führen. Daher wird vor dem Receiver ein Gleichtakt-Filter angeordnet. Der Gleichtakt-Filter kann dabei ein diskretes oder integriertes passives Netzwerk sein oder aber als Gleichtakt-Drossel (Common-mode Choke) ausgebildet sein.

Weiter ist vorgesehen, dass während des Betriebes diese Übertragungsfunktion ermittelt oder überprüft wird. Hierzu ist das erste Steuergerät derart ausgebildet, dass in einem Kalibriermodus mindestens ein Gleichtakt-Signal zum weiteren Steuergerät übertragen wird, wobei ein aufgrund des Gleichtakt-Signals erzeugtes Differenz-Signal erfasst und zur Einstellung der Fehler-Korrekturschaltung und/oder der Kompensationsschaltung verwendet wird. Dabei ist zu berücksichtigen, dass im Regelfall der Ort der Gleichtakt-Einkopplung im Betriebsfall nicht das erste Steuergerät ist, sondern irgendwo auf der Zwei-Drahtleitung ist. Dies ist aber vernachlässigbar bzw. gegebenenfalls durch Korrekturterme zu kompensieren. Dabei ist zu beachten, dass dieser Differenz-Signalfehler aufgrund von Gleichtakt-Anteilen frequenzabhängig ist. Vorzugsweise wird daher die Übertragungsstrecke ausgemessen und eine Übertragungsfunktion bestimmt. Diese gibt dann an, was für einen Differenz-Signalfehler ein Gleichtakt-Anteil in Abhängigkeit von Frequenz verursacht.

In einer Ausführungsform ist der Gleichtakt-Filter in dem Chip des Receivers integriert, beispielsweise als LC-Netzwerk oder aber als aktives Bauelement, beispielsweise als Differenzverstärker mit hoher Gleichtaktunterdrückung. Dies erlaubt eine kompakte Bauform und eine geringe Anzahl von Bauelementen.

In einer weiteren Ausführungsform ist die Messschaltung vor oder in dem Gleichtakt-Filter angeordnet. Der Vorteil gegenüber einer grundsätzlich möglichen Bauform hinter dem Gleichtakt-Filter ist, dass das zu erfassende Gleichtakt-Signal größer ist und einfacher zu erfassen ist.

In einer weiteren Ausführungsform sind die Fehler-Korrekturschaltung und/oder die Kompensationsschaltung derart ausgebildet, dass ein Differenz-Signalfehler im Nutzsignal aufgrund eines Gleichtakt-Anteils kompensiert wird. Derartige Fehler entstehen durch Unsymmetrien im Übertragungskanal, beispielsweise weil die beiden Drahte der Zwei-Drahtleitung nicht exakt lang sind. Derartige Fehler sind durch eine reine GleichtaktUnterdrückung, wie aus dem Stand der Technik bekannt, nicht zu korrigieren. Erfindungsgemäß kann dies jedoch erfolgen, da der Gleichtakt-Anteil messtechnisch erfasst wird.

In einer weiteren Ausführungsform ist der Differenz-Signalfehler in Abhängigkeit mindestens eines Parameters festgelegt. Ein solcher Parameter ist beispielsweise die Temperatur. So können beispielsweise für unterschiedliche Temperaturen Übertragungsfunktionen hinterlegt sein oder aber der Parameter geht als Korrekturfaktor in die Bestimmung des Differenz-Signalfehlers ein.

Hinsichtlich der Ausbildung des Steuergerätes sowie des Verfahrens kann vollinhaltlich auf die vorangegangenen Ausführungen Bezug genommen werden.

Ein bevorzugtes Anwendungsgebiet der Erfindung ist der Einsatz in einem Ethernet-Übertragungssystem in einem Kraftfahrzeug.

Die Erfindung wird nachfolgend anhand bevorzugter Ausführungsbeispiele näher erläutert.

Die Fig. zeigen:
- Fig. 1: ein schematisches Blockschaltbild eines Datenübertragungssystems in einer ersten Ausführungsform,
- Fig. 2: ein Teil-Blockschaltbild eines Steuergerätes,
- Fig. 3: ein schematisches Blockschaltbild eines Datenübertragungssystems in einer zweiten Ausführungsform,
- Fig. 4: ein Teil-Blockschaltbild eines Steuergerätes und
- Fig. 5: ein schematisches Blockschaltbild eines Datenübertragungssystems gemäß dem Stand der Technik.

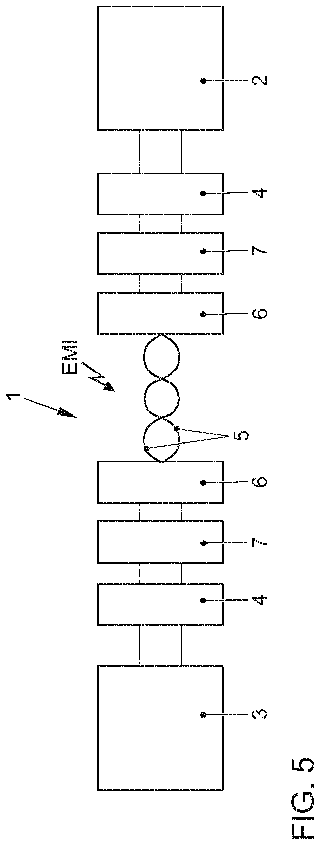

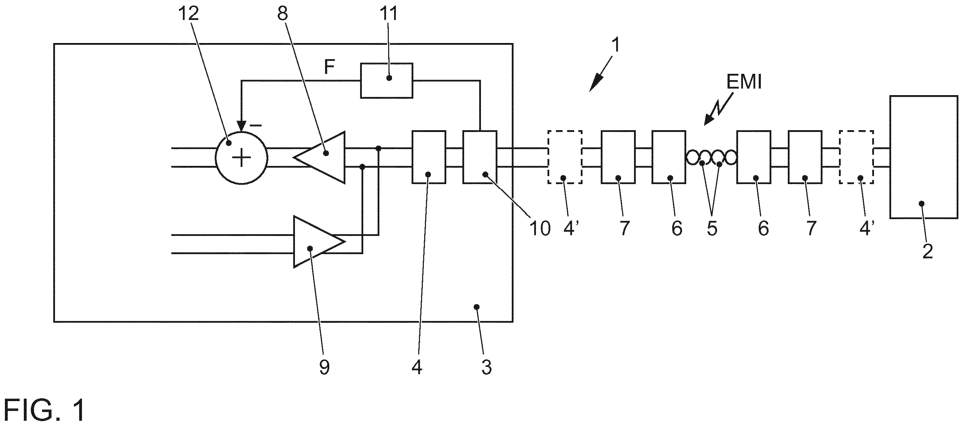

Bevor die Erfindung näher erläutert wird, soll zunächst kurz der Stand der Technik anhand der Fig. 5 erläutert werden. Das Datenübertragungssystem 1 weist ein erstes Steuergerät 2 und ein zweites Steuergerät 3 auf, über die eine bidirektionale Punkt-zu-Punkt-Kommunikation realisierbar ist. Vor jedem Steuergerät 2, 3 ist ein diskreter erster Gleichtakt-Filter 4 angeordnet, der beispielsweise als Common-Mode-Choke ausgebildet ist, wo die zwei Drähte einer Zwei-Drahtleitung 5 gegensinnig um einen gemeinsamen Ferrit-Kern bzw. -Ring gewickelt sind. Die Zwei-Drahtleitung 5 ist an ihren Enden mit Verbindern bzw. Steckern 6 verbunden. Zwischen dem Stecker 6 und dem Gleichtakt-Filter 4 kann dabei noch eine galvanische Trennung in Form eines Transformators 7 angeordnet sein. Alternativ kann der Transformator 7 auch durch eine kapazitive Kopplung ersetzt werden. Die Nutzsignale zwischen den beiden Steuergeräten 2, 3 werden durch Differenz-Signale übertragen, wobei durch elektromagnetische Interferenz EMI verursachte Gleichtakt-Anteile durch die Gleichtakt-Filter 4 herausgefiltert werden.

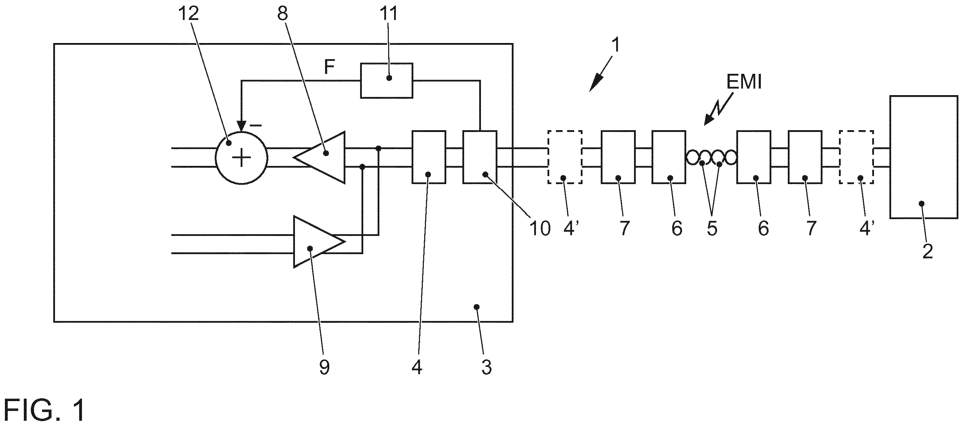

In der Fig. 1 ist nun ein Datenübertragungssystem 1 in einer ersten erfindungsgemäßen Ausführungsform dargestellt. Dabei wurde der Gleichtakt-Filter 4 in das Steuergerät 3 integriert, genauer in den Chip für einen Receiver 8 und einen Transceiver 9 des Steuergerätes 3, wobei die nachfolgenden Ausführungen für das zweite Steuergerät 3 auch für das erste Steuergerät 2 gelten. Das Steuergerät 3 weist weiter eine Messschaltung 10 auf, die vor dem Gleichtakt-Filter 4 angeordnet ist und den Gleichtakt-Anteil erfasst. Weiter weist das Steuergerät 3 eine Fehler-Korrekturschaltung 11 auf, die ein Korrektursignal F ausgibt und an eine Kompensationsschaltung 12 übermittelt. In der Kompensationsschaltung 12 wird dann von dem vom Receiver 8 empfangenen Nutzsignal das Korrektursignal F abgezogen, wobei das Korrektursignal F insbesondere Differenz-Fehler aufgrund von Gleichtakt-Signalen berücksichtigt. Dabei können Receiver 8, Transceiver 9, Messschaltung 10, Fehler-Korrekturschaltung 11 und Kompensationsschaltung 12 auf einem Chip realisiert sein. Dabei kann zusätzlich ein weiterer Gleichtakt-Filter 4' vor dem Steuergerät 3 angeordnet sein, was gestrichelt dargestellt ist. Dieser Gleichtakt-Filter 4' hat die Funktion, die Gleichtakt-Anteile soweit wie möglich herauszufiltern, insbesondere jedoch die Gleichtakt-Anteile auf ein Spannungsniveau zu reduzieren, das besser im Steuergerät 3 verarbeitet werden kann. Weiter sei angemerkt, dass der Transformator 7 optional ist. Des Weiteren sei angemerkt, dass die Fehler-Korrekturschaltung 11 derart ausgebildet ist, dass die Laufzeit des Korrektursignals F auf das Nutzsignal derart abgestimmt ist, dass diese synchron an der Kompensationsschaltung 12 anliegen. Dabei kann die Fehler-Korrekturschaltung 11 auch derart ausgebildet sein, dass vorangegangene Signale bei der Ermittlung des Korrektursignals F berücksichtigt werden, beispielsweise um Umladevorgänge von Kapazitäten zu berücksichtigen.

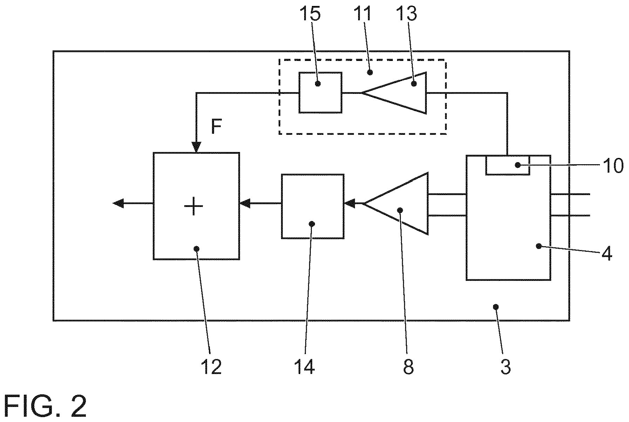

In der Fig. 2 ist beispielhaft eine mögliche präzisierte Ausführungsform eines Teils des zweiten Steuergerätes 3 dargestellt. Im Gegensatz zur Darstellung gemäß Fig. 1 liegt die Messschaltung 10 nicht vor sondern im Gleichtakt-Filter 4 . Des Weiteren wird hinter dem Receiver 8 und einem Verstärker 13 der Fehler-Korrekturschaltung 11 jeweils ein A/D-Wandler 14, 15 angeordnet, wobei dann die Kompensationsschaltung 12 als digitaler Filter ausgebildet sein kann.

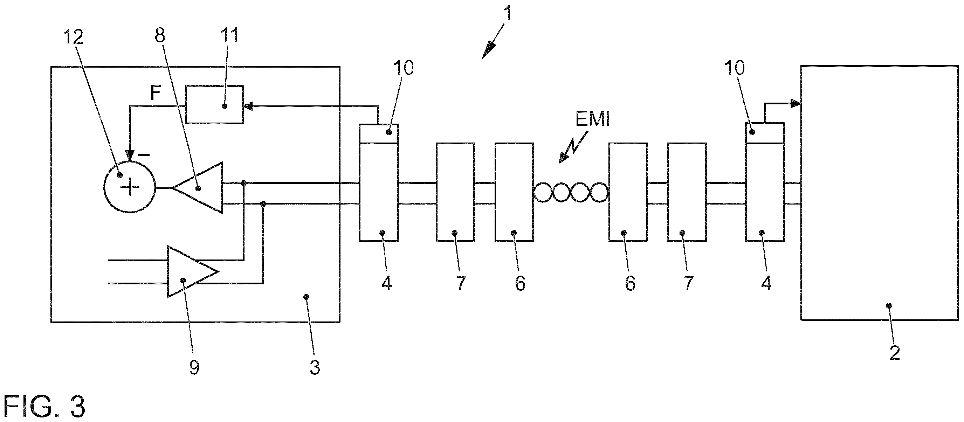

In der Fig. 3 ist eine alternative Ausführungsform für ein Datenübertragungssystem 1 dargestellt. Im Unterschied zur Ausführungsform gemäß Fig. 1 ist der Gleichtakt-Filter 4 extern angeordnet und die Messschaltung 10 in den Gleichtakt-Filter 4 integriert. Dabei muss das Steuergerät 3 entsprechend einen weiteren Eingang für das Messgerät der Messschaltung 10 aufweisen. Ansonsten kann auf die Ausführungen zu Fig. 1 Bezug genommen werden.

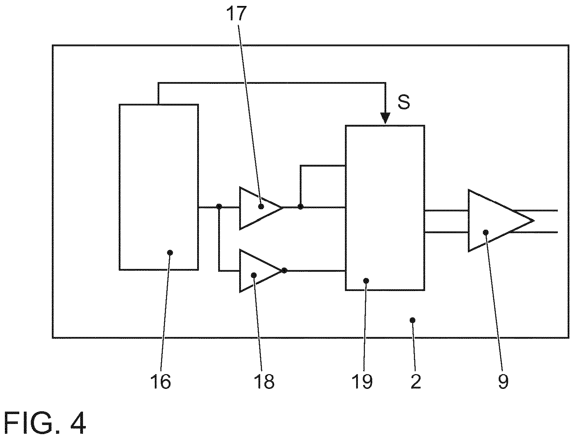

In der Fig. 4 ist schließlich ein Teil eines ersten Steuergerätes 2 dargestellt. Dabei weist das Steuergerät 2 einen Mikroprozessor 16 auf, der die Nutzsignale erzeugt. Das Nutzsignal wird durch einen ersten Verstärker 17 verstärkt und durch einen invertierenden Verstärker 18 invertiert, so dass das Nutzsignal als Differenz-Signal an einen Multiplexer 19 anliegt.

Des Weiteren wird das nun verstärkte Nutzsignal an einen weiteren Eingang des Multiplexers 19 geschaltet. Über ein Steuersignal S kann der Mikroprozessor 16 entweder das Differenz-Signal oder ein Gleichtakt-Signal der beiden verstärkten Nutzsignale zum Transceiver 9 durchschalten. Mittels des Gleichtakt-Signals kann dann die Übertragungsfunktion der Übertragungsstrecke bestimmt werden, insbesondere der Differenz-Fehler aufgrund eines Gleichtaktsignals. Dabei sei noch einmal angemerkt, dass die Ausführungen für das erste Steuergerät 2 auch für das zweite Steuergerät 3 gelten und umgekehrt.

## Patentansprüche

1. Datenübertragungssystem (1), wobei das Datenübertragungssystem (1) ein erstes Steuergerät (2) und ein zweites Steuergerät (3) aufweist, wobei die Übertragungsstrecke zwischen den beiden Steuergeräten (2, 3) mindestens teilweise durch eine Zwei-Drahtleitung (5) gebildet wird, über die ein Nutzsignal als Differenzsignal zwischen dem ersten Steuergerät (2) und dem zweiten Steuergerät (3) übertragen wird, wobei das erste Steuergerät (2) einen Transceiver (9) und das zweite Steuergerät (3) einen Receiver (8) aufweist, wobei
vor dem Receiver (8) des zweiten Steuergerätes (3) eine Messschaltung (10) angeordnet ist, die derart ausgebildet ist, einen Gleichtakt-Anteil im Nutzsignal zu erfassen, wobei eine Fehler-Korrekturschaltung (11) vorgesehen ist, die derart ausgebildet ist, dass in Abhängigkeit vom erfassten Gleichtakt-Anteil ein Korrektursignal (F) erzeugt wird, wobei eine Kompensationsschaltung (12) hinter dem Receiver (8) angeordnet ist, wobei die Kompensationsschaltung (12) derart ausgebildet ist, dass das durch den Receiver (8) empfangene Nutzsignal mittels des Korrektursignals (F) korrigiert wird, wobei
vor dem Receiver (8) ein Gleichtakt-Filter (4) angeordnet ist,
**dadurch gekennzeichnet, dass**
das erste Steuergerät (2) derart ausgebildet ist, dass in einem Kalibriermodus mindestens ein Gleichtakt-Signal zum zweiten Steuergerät (3) übertragen wird, wobei ein aufgrund des Gleichtakt-Signals erzeugtes Differenz-Signal erfasst und zur Einstellung der Fehler-Korrekturschaltung (11) und/oder Kompensationsschaltung (12) verwendet wird.

2. Datenübertragungssystem nach Anspruch 1, **dadurch gekennzeichnet, dass** der Gleichtakt-Filter (4) in einem Chip des Receivers (8) integriert ist.

3. Datenübertragungssystem nach einem der Ansprüche 1 oder 2, **dadurch gekennzeichnet, dass** die Messschaltung (10) vor oder in dem Gleichtakt-Filter (4) angeordnet ist.

4. Datenübertragungssystem nach einem der vorangegangenen Ansprüche, **dadurch gekennzeichnet, dass** die Fehler-Korrekturschaltung (11) und/oder die Kompensationsschaltung (12) derart ausgebildet sind, dass ein Differenz-Signalfehler aufgrund eines Gleichtakt-Anteils im Nutzsignal kompensiert wird.

5. Datenübertragungssystem nach Anspruch 4, **dadurch gekennzeichnet, dass** der Differenz-Signalfehler in Abhängigkeit mindestens eines Parameters festgelegt ist.

6. Steuergerät (2, 3), umfassend einen Receiver (8), **dadurch gekennzeichnet, dass** das Steuergerät (2, 3) eine Fehler-Korrekturschaltung (11) aufweist, die derart ausgebildet ist, dass in Abhängigkeit von einem erfassten Gleichtakt-Anteil ein Korrektursignal (F) erzeugt wird, wobei eine Kompensationsschaltung (12) hinter dem Receiver (8) angeordnet ist, wobei die Kompensationsschaltung (12) derart ausgebildet ist, dass das durch den Receiver (8) empfangene Nutzsignal mittels des Korrektursignals (F) korrigiert wird, wobei vor dem Receiver (8) ein Gleichtakt-Filter (4) angeordnet ist, **dadurch gekennzeichnet, dass**
das Steuergerät (2, 3) zusätzlich einen Transceiver (9) aufweist, wobei das Steuergerät (2, 3) derart ausgebildet ist, dass in einem Kalibriermodus mindestens ein Gleichtakt-Signal übertragen werden kann, und
wobei der Receiver (8) im Kalibriermodus ein aufgrund des Gleichtakt-Signals erzeugtes Differenz-Signal erfasst und zur Einstellung der Fehler-Korrekturschaltung (11) und/oder Kompensationsschaltung (12) verwendet.

7. Verfahren zur Datenübertragung in einem Datenübertragungssystem (1), mittels einem ersten Steuergerät (2) und einem zweiten Steuergerät (3), wobei die Übertragungsstrecke zwischen den beiden Steuergeräten (2, 3) mindestens teilweise durch eine Zwei-Drahtleitung (5) gebildet wird, über die ein Nutzsignal als Differenzsignal zwischen dem ersten Steuergerät (2) und dem zweiten Steuergerät (3) übertragen wird, wobei das erste Steuergerät (2) einen Transceiver (9) und das zweite Steuergerät (3) einen Receiver (8) aufweist, wobei vor dem Receiver (8) des zweiten Steuergerätes (3) eine Messschaltung (10) angeordnet ist, die einen Gleichtakt-Anteil im Nutzsignal erfasst, wobei eine Fehler-Korrekturschaltung (11) in Abhängigkeit vom erfassten Gleichtakt-Anteil ein Korrektur-signal (F) erzeugt, das einer hinter dem Receiver (8) angeordneten Kompensationsschaltung (12) zugeführt wird, die das vom Receiver (8) empfangene Nutzsignal mittels des Korrektursignals (F) korrigiert, wobei vor dem Receiver (8) ein Gleichtakt-filter (4) angeordnet ist,
**dadurch gekennzeichnet, dass**
das erste Steuergerät (2) in einem Kalibriermodus mindestens ein Gleichtaktsignal zum zweiten Steuergerät (3) überträgt, wobei ein aufgrund des Gleichtakt-Signals erzeugtes Differenz-Signal erfasst und zur Einstellung der Fehler-Korrekturschaltung (11) und/oder Kompensationsschaltung (12) verwendet wird.

## Claims

1. Data transfer system (1), wherein the data transfer system (1) comprises a first control unit (2) and a second control unit (3), wherein the transfer link between the two control units (2, 3) is formed at least in part by a two-wire cable (5) that is used to transfer a useful signal between the first control unit (2) and the second control unit (3) as a differential signal, wherein the first control unit (2) comprises a transceiver (9) and the second control unit (3) comprises a receiver (8), wherein
a measuring circuit (10) is arranged upstream of the receiver (8) of the second control unit (3), said measuring circuit being designed in such a way as to detect a common-mode component in the useful signal, wherein an error correction circuit (11) is provided that is designed in such a way that the detected common-mode component is taken as a basis for generating a correction signal (F), wherein a compensation circuit (12) is arranged downstream of the receiver (8), wherein the compensation circuit (12) is designed in such a way that the useful signal received by the receiver (8) is corrected by means of the correction signal (F), wherein
a common-mode filter (4) is arranged upstream of the receiver (8),
**characterized in that**
the first control unit (2) is designed in such a way that in a calibration mode at least one common-mode signal is transferred to the second control unit (3), wherein a differential signal generated on the basis of the common-mode signal is detected and used for adjusting the error correction circuit (11) and/or the compensation circuit (12).

2. Data transfer system according to Claim 1, **characterized in that** the common-mode filter (4) is integrated in a chip of the receiver (8).

3. Data transfer system according to either of Claims 1 and 2, **characterized in that** the measuring circuit (10) is arranged upstream of or in the common-mode filter (4).

4. Data transfer system according to one of the preceding claims, **characterized in that** the error correction circuit (11) and/or the compensation circuit (12) are designed in such a way that a differential signal error resulting from a common-mode component in the useful signal is compensated for.

5. Data transfer system according to Claim 4, **characterized in that** the differential signal error is specified on the basis of at least one parameter.

6. Control unit (2, 3), comprising a receiver (8), **characterized in that** the control unit (2, 3) comprises an error correction circuit (11) that is designed in such a way that a detected common-mode component is taken as a basis for generating a correction signal (F), wherein a compensation circuit (12) is arranged downstream of the receiver (8), wherein the compensation circuit (12) is designed in such a way that the useful signal received by the receiver (8) is corrected by means of the correction signal (F), wherein a common-mode filter (4) is arranged upstream of the receiver (8),
**characterized in that**
the control unit (2, 3) additionally comprises a transceiver (9), wherein the control unit (2, 3) is designed in such a way that in a calibration mode at least one common-mode signal can be transferred, and wherein in the calibration mode the receiver (8) detects a differential signal generated on the basis of the common-mode signal and uses said differential signal for adjusting the error correction circuit (11) and/or the compensation circuit (12).

7. Method for data transfer in a data transfer system (1), by means of a first control unit (2) and a second control unit (3), wherein the transfer link between the two control units (2, 3) is formed at least in part by a two-wire cable (5) that is used to transfer a useful signal between the first control unit (2) and the second control unit (3) as a differential signal, wherein the first control unit (2) comprises a transceiver (9) and the second control unit (3) comprises a receiver (8), wherein a measuring circuit (10) is arranged upstream of the receiver (8) of the second control unit (3), said measuring circuit detecting a common-mode component in the useful signal, wherein an error correction circuit (11) takes the detected common-mode component as a basis for generating a correction signal (F), which is supplied to a compensation circuit (12), arranged downstream of the receiver (8), that corrects the useful signal received from the receiver (8) by means of the correction signal (F), wherein a common-mode filter (4) is arranged upstream of the receiver (8),
**characterized in that**
in a calibration mode the first control unit (2) transfers at least one common-mode signal to the second control unit (3), wherein a differential signal generated on the basis of the common-mode signal is detected and used for adjusting the error correction circuit (11) and/or the compensation circuit (12).

## Revendications

1. Système de transmission de données (1), le système de transmission de données (1) comportant une première unité de commande (2) et une deuxième unité de commande (3), la liaison de transmission entre les deux unités de commande (2, 3) étant formée au moins partiellement par une ligne bifilaire (5) sur laquelle un signal utile est transmis sous la forme d'un signal différentiel entre la première unité de commande (2) et la deuxième unité de commande (3), la première unité de commande (2) comportant un transmetteur (9) et la deuxième unité de commande (3) comportant un récepteur (8), un circuit de mesure (10) étant disposé devant le récepteur (8) de la deuxième unité de commande (3) et étant conçu pour détecter une composante de mode commun dans le signal utile, un circuit de correction d'erreurs (11) étant prévu qui est conçu de manière à générer un signal de correction (F) en fonction de la composante de mode commun détectée, un circuit de compensation (12) étant disposé en arrière du récepteur (8), le circuit de compensation (12) étant conçu de manière à corriger le signal utile reçu par le récepteur (8) au moyen du signal de correction (F), un filtre de mode commun (4) étant disposé devant le récepteur (8),
**caractérisé en ce que**
la première unité de commande (2) est conçue de manière à transmettre au moins un signal de mode commun à la deuxième unité de commande (3) dans un mode d'étalonnage, un signal différentiel généré sur la base du signal de mode commun étant détecté et utilisé pour ajuster le circuit de correction d'erreur (11) et/ou le circuit de compensation (12).

2. Système de transmission de données selon la revendication 1, **caractérisé en ce que** le filtre de mode commun (4) est intégré dans une puce du récepteur (8) .

3. Système de transmission de données selon l'une des revendications 1 ou 2, **caractérisé en ce que** le circuit de mesure (10) est disposé avant ou dans le filtre de mode commun (4).

4. Système de transmission de données selon l'une des revendications précédentes, **caractérisé en ce que** le circuit de correction d'erreur (11) et/ou le circuit de compensation (12) sont conçus de manière à compenser une erreur de signal différentiel due à une composante de mode commun dans le signal utile.

5. Système de transmission de données selon la revendication 4, **caractérisé en ce que** l'erreur de signal différentiel est définie en fonction d'au moins un paramètre.

6. Unité de commande (2, 3) comprenant un récepteur (8), **caractérisée en ce que** l'unité de commande (2, 3) comporte un circuit de correction d'erreurs (11) qui est conçu de manière à générer un signal de correction (F) en fonction d'une composante de mode commun détectée, un circuit de compensation (12) étant disposé en arrière du récepteur (8), le circuit de compensation (12) étant conçu de manière à corriger le signal utile reçu par le récepteur (8) au moyen du signal de correction (F), un filtre de mode commun (4) étant disposé devant le récepteur (8),
**caractérisée en ce que**
l'unité de commande (2, 3) comporte également un transmetteur (9), l'unité de commande (2, 3) étant conçue de manière à transmettre au moins un signal de mode commun dans un mode d'étalonnage et
le récepteur (8) détectant dans le mode d'étalonnage un signal différentiel généré sur la base du signal de mode commun et l'utilisant pour ajuster le circuit de correction d'erreurs (11) et/ou le circuit de compensation (12).

7. Procédé de transmission de données dans un système de transmission de données (1), au moyen d'une première unité de commande (2) et d'une deuxième unité de commande (3), la liaison de transmission entre les deux unités de commande (2, 3) étant formée au moins partiellement par une ligne bifilaire (5) sur laquelle un signal utile est transmis sous la forme d'un signal différentiel entre la première unité de commande (2) et la deuxième unité de commande unité (3), la première unité de commande (2) comportant un transmetteur (9) et le deuxième unité de commande (3) comportant un récepteur (8), un circuit de mesure (10) étant disposé devant le récepteur (8) de la deuxième unité de commande (3) et détectant une composante de mode commun dans le signal utile, un circuit de correction d'erreurs (11) générant, en fonction de la composante de mode commun détectée, un signal de correction (F) qui est acheminé à un circuit de compensation (12) qui est disposé en arrière du récepteur (8) et qui corrige le signal utile reçu de le récepteur (8) au moyen du signal de correction (F), un filtre de mode commun (4) étant disposé devant le récepteur (8),
**caractérisé en ce que**
la première unité de commande (2) transmet au moins un signal de mode commun à la deuxième unité de commande (3) dans un mode d'étalonnage, un signal différentiel généré sur la base du signal de mode commun étant détecté et utilisé pour ajuster le circuit de correction d'erreurs (11) et/ou le circuit de compensation (12).
